# EUROPÄISCHE PATENTANMELDUNG

(11) **EP 2 533 469 A1**
(43) Veröffentlichungstag der Anmeldung: **12.12.2012**
(21) Anmeldenummer: 12169329.5
(22) Anmeldetag: 24.05.2012
(51) Int. Cl.: H04L 12/28

(54) **Telekommunikationsendgerät, Benachrichtigungsverfahren und Hauskommunikationsanlage**

(30) Priorität: 18.01.2012 DE 102012200667; 06.06.2011 DE 102011077000
(71) Anmelder: S. Siedle & Söhne Telefon- und Telegrafenwerke OHG, 78120 Furtwangen (DE)
(72) Erfinder: Reitinger, Andreas, 78120 Furtwangen (DE)
(74) Vertreter: Isarpatent

(57) **Zusammenfassung**

Die vorliegende Erfindung offenbart ein Telekommunikationsendgerät (1), insbesondere ein Hauskommunikationsendgerät für eine Hauskommunikationsanlage, zum Speichern und Ausgeben benutzergenerierter Daten mit mindestens einer Datenerfassungseinrichtung (2) zum Erfassen von solchen benutzergenerierten Daten, welche in mindestens zwei Datenarten unterschiedlicher Erscheinungsform vorliegen, mit mindestens einem Datenspeicher (4) zum Speichern der benutzergenerierten Daten, mit mindestens einer Datenausgabeeinrichtung (5), welche dazu ausgebildet ist, einen Satz benutzergenerierter Daten, die mindestens zwei unterschiedlichen Datenarten zugeordnet sind, gleichzeitig auszugeben, und mit einer Steuereinrichtung (3), welche dazu ausgebildet ist, benutzergenerierte Daten von der Datenerfassungseinrichtung abzufragen und in dem Datenspeicher zu speichern und benutzergenerierte Daten aus dem Datenspeicher auszulesen und der Datenausgabeeinrichtung bereitzustellen. Ferner offenbart die vorliegende Erfindung ein Benachrichtigungsverfahren und eine Hauskommunikationsanlage.

## Beschreibung

### GEBIET DER ERFINDUNG

Die vorliegende Erfindung betrifft ein Telekommunikationsendgerät zum Speichern und Ausgeben benutzergenerierter Daten, insbesondere ein Hauskommunikationsendgerät für eine Hauskommunikationsanlage. Die vorliegende Erfindung betrifft ferner ein Benachrichtigungsverfahren und eine Hauskommunikationsanlage.

### TECHNISCHER HINTERGRUND

Haustelefone sind allgemein bekannt. Haustelefone sollen es einem Hausbewohner ermöglichen, mit einer Person zu kommunizieren, welche sich z.B. an einer Eingangstüre befindet.

Ferner werden in modernen Gebäuden zunehmend Hauskommunikationsanlagen verwendet, welche eine Vielzahl von Steuerfunktionen übernehmen. Solche Steuerfunktionen können z.B. das Steuern einer Heizung, das Öffnen und Schließen von Rollos oder das Öffnen einer Türe sein. Zur Kommunikation eines Benutzers mit einer solchen Hauskommunikationsanlage oder etwa mit anderen Teilnehmern bieten sich die oben erwähnten Haustelefone an, zumal diese in vielen Gebäuden bereits vorhanden sind.

Da der Funktionsumfang moderner Hauskommunikationsanlagen sehr umfangreich ist, gestaltet sich eine Steuerung einer solchen Hauskommunikationsanlage über ein einfaches Haustelefon zunehmend als schwierig. Für umfangreiche Hauskommunikationsanlagen werden daher Steuerkonsolen eingesetzt, welche sowohl als Haustelefon mit Video-Funktion als auch als Eingabevorrichtung für eine Hauskommunikationsanlage dienen. Solche Steuerkonsolen verfügen üblicherweise über einen Touchscreen und/oder einen Trackball bzw. anderen Datenerfassungseinrichtungen, wie z.B. Stift, Maus, zur Dateneingabe. Ferner kann eine solche Steuerkonsole - neben Lautsprecher und Mikrofon - über einen Monitor und eine Videokamera verfügen, wodurch eine Kommunikation mit Türsprechanlagen ermöglicht wird. Einige Steuerkonsolen ermöglichen es, Botschaften für weitere Bewohner einer Immobilie aufzunehmen und für diese zu speichern. Die Steuerkonsole signalisiert das Vorhandensein einer solchen Nachricht ähnlich wie ein Anrufbeantworter. Die Zielperson kann diese Nachricht bei Bedarf abrufen.

### ZUSAMMENFASSUNG DER ERFINDUNG

Es ist nun eine Aufgabe der vorliegenden Erfindung, ein für den Benutzer komfortables Benachrichtigungssystem für Hauskommunikationsanlagen bereitzustellen.

Diese Aufgabe wird durch ein Telekommunikationsendgerät mit den Merkmalen des Patentanspruchs 1, ein Benachrichtigungsverfahren mit den Merkmalen des Patentanspruchs 14 und eine Hauskommunikationsanlage mit den Merkmalen des Patentanspruchs 17 gelöst.

Demgemäß ist vorgesehen:
- Ein Telekommunikationsendgerät, zum Speichern und Ausgeben benutzergenerierter Daten, insbesondere Hauskommunikationsendgerät für eine Hauskommunikationsanlage mit mindestens einer Datenerfassungseinrichtung zum Erfassen von solchen benutzergenerierten Daten, welche in mindestens zwei Datenarten unterschiedlicher Erscheinungsform vorliegen, mit mindestens einem Datenspeicher zum Speichern der benutzergenerierten Daten, mit mindestens einer Datenausgabeeinrichtung, welche dazu ausgebildet ist, einen Satz benutzergenerierter Daten, die mindestens zwei unterschiedlichen Datenarten zugeordnet sind, gleichzeitig auszugeben, und mit einer Steuereinrichtung, welche dazu ausgebildet ist, benutzergenerierte Daten von der Datenerfassungseinrichtung abzufragen und in dem Datenspeicher zu speichern und benutzergenerierten Daten aus dem Datenspeicher auszulesen und der Datenausgabeeinrichtung bereitzustellen;
- Ein Benachrichtigungsverfahren für eine Hauskommunikationsanlage zum Benachrichtigen eines Benutzers mittels zweier unterschiedlicher Datenarten, mit den Schritten: Bereitstellen benutzergenerierter Daten, welche in mindestens zwei Datenarten unterschiedlicher Erscheinungsform vorliegen; Kombinieren mindestens zweier Datenarten der benutzergenerierten Daten, wobei die Datenarten als Bilddaten und/oder Videodaten und/oder Audiodaten und/oder Textdaten ausgebildet sind, und gleichzeitiges Ausgeben der kombinierten Datenarten;
- Eine Hauskommunikationsanlage mit mindestens einem erfindungsgemäßen Telekommunikationsendgerät, mit einer zentralen Steuereinrichtung, welche dazu ausgebildet ist, Funktionen der Hauskommunikationsanlage zu steuern und mit einem Steuer- und/oder Datennetzwerk, welches die Telekommunikationsendgeräte untereinander und mit der zentralen Steuereinrichtung koppelt.

Die der vorliegenden Erfindung zu Grunde liegende Erkenntnis besteht darin, dass mittels einer Nachricht, welche nur eine einzige Datenart, z.B. Videodaten, Audiodaten oder Textdaten, beinhaltet, die gewünschten Informationen bisweilen nur unvollständig oder schwer transportiert werden können.

Die der vorliegenden Erfindung zu Grunde liegende Idee besteht nun darin, eine Möglichkeit vorzusehen, unterschiedliche Datenarten in einer einzigen Nachricht zu kombinieren und diese gleichzeitig auszugeben. Dazu schlägt die vorliegende Erfindung ein Telekommunikationsendgerät vor, welche eine Datenerfassungseinrichtung, z.B. eine Kamera, aufweist, welche dazu ausgelegt ist, von einem Benutzer Daten, z.B. ein Video, aufzunehmen. Ferner ist die Datenerfassungseinrichtung dazu ausgelegt zumindest eine zweite Art von Daten von dem Benutzer entgegenzunehmen. Die zweite Art von Daten kann z.B. Text sein. Diese zwei Arten von Daten werden daraufhin in einem Datenspeicher abgelegt, von welchem aus die Daten bei Bedarf abgerufen und einem weiteren Benutzer angezeigt werden können. Zur Anzeige der Daten werden die zwei Datenarten kombiniert und dem Benutzer als eine kombinierte Datenausgabe angezeigt.

Vorteilhafte Ausführungsformen und Weiterbildungen ergeben sich aus den Unteransprüchen sowie aus der Beschreibung unter Bezugnahme auf die Figuren.

In einer vorteilhaften Ausführungsform bezeichnen die Datenarten Bilddaten und/oder Videodaten und/oder Audiodaten und/oder Textdaten. Dies ermöglicht es einem Benutzer flexibel diejenigen Datenarten zu kombinieren, welche er für die Übermittlung der Nachricht als geeignet ansieht. Ein Einsatz des erfindungsgemäßen Telekommunikationsendgeräts in einer Vielzahl von Anwendungsfällen wird dadurch ermöglicht. Beispielsweise kann ein Benutzer ein Video mit kurzen Textbotschaften zu einzelnen Szenen versehen oder der Benutzer kann z.B. eine Einkaufsliste in Form einer Textnachricht mit einem gesprochenen Kommentar erläutern. Das Format der einzelnen Daten ist dabei frei wählbar. Textdaten können z.B. formatierten Text aufweisen. Dadurch können Schriftart, Farbe, Größe des Texts und dergleichen festgelegt werden oder Hyperlinks, eMail-Kontakte, Telefonbuch-Verweise oder dergleichen hinterlegt werden. Bilddaten können Standbilder, Bildserien, Animation oder dergleichen aufweisen und Videodaten können sowohl 2D- als auch plastische 3D-Darstellungen aufweisen.

Dadurch kann z.B. eine Sprachnachricht eines Besuchers vor der Türe als kombinierte Nachricht mit Bild, z.B. einem Schnappschuss bzw. einem Videostream, in der Mailbox der Zielperson hinterlegt werden. Ferner kann z.B. ein Systemteilnehmer bei einem Kollegen, der z.B. im Urlaub ist, eine kombinierte Nachricht mit Sprachaufzeichnung, schriftlichen Details, Links und dergleichen hinterlegen. Ferner kann ein Benutzer Nachrichten aufzeichnen und diese für sich selbst nutzen. Dadurch wird es in einer Ausführungsform möglich, das Telekommunikationsendgerät als virtuellen Notizblock zu nutzen.

In einer weiteren Ausführungsform weist die Datenerfassungseinrichtung zusätzlich eine Kamera und/oder ein Mikrofon und/oder einen Touchscreen und/oder eine Tastatur und/oder eine Maus und/oder einen Trackball bzw. Stift und/oder eine optische Datenerfassungseinrichtung aufweist auf. Dies ermöglicht einen kompakten und damit auch günstigen Aufbau des Telekommunikationsendgeräts, da alle zur Datenerfassung notwendigen Einrichtungen in dem Telekommunikationsendgerät zusammengefasst werden können.

Die optische Datenerfassungseinrichtung ermöglicht z.B. das erkennen von Gesten. Ferner lässt sich eine virtuelle Tastatur optisch auf die Schreibtischfläche projizieren, wobei die Fingerbewegungen z.B. via Laser abgetastet werden.

In einer weiteren Ausführungsform weist der Datenspeicher einen RAM-Speicher und/oder eine Festplatte und/oder einen USB-Speicher und/oder eine Speicherkarte auf. Der Einsatz unterschiedlicher Speicherarten ermöglicht es, das Telekommunikationsendgerät flexibel an unterschiedliche Anwendungen zu adaptieren. Wird z.B. ein größerer Datenspeicher benötigt, als ursprünglich in dem Telekommunikationsendgerät vorgesehen, so kann dieser einfach durch einen USB-Speicher oder eine Speicherkarte, z.B. eine SD-Speicherkarte, ergänzt werden.

In einer weiteren Ausführungsform weist die Datenausgabeeinrichtung eine optische und/oder eine akustische und/oder eine bewegungsgesteuerte und/oder sonstige elektronische und/oder mechanische Datenausgabeeinrichtung auf. Die Ausgabeeinrichtung kann z.B. als Flachbildschirm mit integrierten Lautsprechern oder als schnurloses Telefon mit Bildschirm, Freisprecheinrichtung und Vibrationsalarm ausgeführt sein. Dies ermöglicht es, eine Vielzahl von Datenarten gleichzeitig auszugeben.

In einer Ausführungsform weist das Telekommunikationsendgerät ferner eine Kommunikationsschnittstelle zum Kommunizieren mit einem externen Datenspeicher und/oder einer Hauskommunikationsanlage auf. Diese Kommunikationsschnittstelle ermöglicht es, das Telekommunikationsendgerät als Teilnehmer eines Netzwerks einzusetzen. Insbesondere kann das Telekommunikationsendgerät als Teilnehmer einer Hauskommunikationsanlage zu Steuer- und Anzeigezwecken genutzt werden. Dies ermöglicht es, das Telekommunikationsendgerät in weiteren Anwendungen einzusetzen. In Hauskommunikationsanlagen können zudem spezialisierte Teilnehmer, wie z.B. reine Eingabekonsolen, eingespart werden. Dadurch wird ein kostengünstiger Aufbau solcher Hauskommunikationsanlagen ermöglicht.

In einer weiteren Ausführungsform weist die Kommunikationsschnittstelle eine Ethernet-Schnittstelle und/oder eine WLAN-Schnittstelle und/oder eine Mobilfunk-Schnittstelle und/oder eine UMTS-Schnittstelle und/oder eine USB-Schnittstelle und/oder eine LightPeak-Schnittstelle und/oder eine Bluetooth-Schnittstelle auf. Das Vorsehen unterschiedlicher Schnittstellen als Kommunikationsschnittstelle ermöglicht es, das Telekommunikationsendgerät flexibel an unterschiedliche Anforderungen anzupassen und es in unterschiedlichen Einsatzumgebungen zu nutzen.

In einer Ausführungsform ermöglicht es die Kommunikationsschnittstelle, dass ein Telekommunikationsendgerät, welches sich nicht in dem Ethernet-Netzwerk einer Hauskommunikationsanlage befindet, eine VPN-Verbindung (Virtual Private Network) zu dem Netzwerk der Hauskommunikationsanlage aufbaut, um so auf alle Funktionen der Hauskommunikationsanlage zuzugreifen.

In einer weiteren Ausführungsform ist die Steuereinrichtung derart ausgebildet, benutzergenerierte Daten, welche über die Kommunikationsschnittstelle an das Telekommunikationsendgerät übermittelt werden, in dem Datenspeicher zu speichern. Zusätzlich oder alternativ ist die Steuereinrichtung derart ausgebildet, benutzergenerierte Daten, welche über die Kommunikationsschnittstelle an das Telekommunikationsendgerät übermittelt werden, der Datenausgabeeinrichtung bereitzustellen. Dadurch wird das Telekommunikationsendgerät zu einem netzwerkfähigen Nachrichtenterminal. Dadurch ist es möglich, Nachrichten für einen Benutzer eines Telekommunikationsendgeräts mittels eines anderen Telekommunikationsendgeräts, eines Computers oder dergleichen aufzuzeichnen und über die Kommunikationsschnittstelle an das Telekommunikationsendgerät zu übertragen. Dort können die Daten entweder direkt einem Benutzer angezeigt werden oder die Daten können zur späteren Anzeige in dem Datenspeicher des Telekommunikationsendgeräts abgelegt werden.

In einer weiteren Ausführungsform kann ein Benutzer Nachrichten, welche er an einem Telekommunikationsendgerät aufnimmt, über die Netzwerkschnittstelle an andere Telekommunikationsendgeräte weiterleiten.

In einer weiteren Ausführungsform ist ein externer Datenspeicher vorgesehen, wobei benutzergenerierte Daten in dem Datenspeicher gespeichert werden und die Steuereinrichtung derart ausgebildet ist, die in dem externen Datenspeicher gespeicherten, benutzergenerierten Daten von dem externen Datenspeicher zu laden und anschließend die geladenen benutzergenerierten Daten der Datenausgabeeinrichtung bereitzustellen. Die Nutzung externer Datenspeicher für die Ablage der benutzergenerierten Daten ermöglicht es, den Datenspeicher flexibel an die momentan benötigte Speicherkapazität anzupassen. Ferner kann ein externer Datenspeicher von einem Telekommunikationsendgerät an ein weiteres Telekommunikationsendgerät angeschlossen werden. Somit können benutzergenerierte Daten auch ohne eine Netzwerkschnittstelle ausgetauscht werden. In einer Ausführungsform ist der externe Datenspeicher als Speicher in einem Datennetzwerk, z.B. dem Internet ausgeführt. Dies kann z.B. ein Cloud-Dienst sein, welcher einen Datenspeicher bereitstellt.

In einer weiteren Ausführungsform ist eine Hinweiseinrichtung vorgesehen, welche derart ausgebildet ist, einen Benutzer auf das Vorhandensein benutzergenerierter Daten hinzuweisen, wobei die Hinweiseinrichtung eine optische Anzeigeeinrichtung und/oder eine akustische Anzeigeeinrichtung und/oder eine mechanische Hinweiseinrichtung aufweist. Dies steigert den Komfort für den Benutzer, da er aktiv auf das Vorhandensein von Nachrichten hingewiesen wird.

In einer Ausführungsform wird zu benutzergenerierten Daten jeweils eine Zeitinformation gespeichert, welche angibt, wie lange die jeweiligen benutzergenerierten Daten anzeigbar sind, oder, in welchen zeitlichen Zyklen die jeweiligen benutzergenerierten Daten anzeigbar sind. Dies ermöglicht es, eine Gültigkeitsdauer für benutzergenerierte Daten anzugeben. Dadurch können z.B. Nachrichten, welche ab einem bestimmten Zeitpunkt nicht mehr benötigt werden, automatisch gelöscht werden und somit Datenspeicher freigegeben werden. Aber nicht nur eine Endzeit für die Gültigkeit einer Nachricht kann angegeben werden. Es kann auch eine Anfangszeit für die Gültigkeit einer Nachricht angegeben werden. Dadurch können Nachrichten bereits vor der gewünschten Anzeigezeit aufgenommen werden. Dies ist zum Beispiel dann hilfreich, falls der Benutzer, welcher die benutzergenerierten Daten aufnimmt, verreist. Andererseits ermöglicht die Angabe einer Zeitinformation, welche sich auf zeitliche Zyklen bezieht, in denen die benutzergenerierten Daten anzeigbar sind, Benutzer z.B. in zyklischen Abständen an bestimmte Ereignisse zu erinnern, z.B. an Geschäftstermine, Geburtstage oder dergleichen. Eine Erinnerung an einen zyklischen Termin könnte beispielsweise jeweils einen Tag vor dem Termin anzeigbar sein. In einer Ausführungsform ist eine Kalenderfunktion vorgesehen, wobei aufgenommene Daten mit Hilfe des Aufnahmedatums oder basierend auf der Zeitinformation in dem Kalender angezeigt werden können.

In einer weiteren Ausführungsform ist das Telekommunikationsendgerät als Tablett-PC, Haus-PDA, als funktionserweiterter Anrufbeantworter und/oder als Computerprogrammprodukt, welches auf einem Computer ausführbar ist, ausgebildet. Wird das Telekommunikationsendgerät als ein Gerät ausgeführt, welches weitere Funktionen aufweist, welche ein Telekommunikationsendgerät üblicherweise nicht aufweist, wird ein sehr flexibler und breiter Einsatz eines solchen Telekommunikationsendgeräts möglich.

In einer weiteren Ausführungsform ist eine Sicherheitseinrichtung vorgesehen, welche dazu ausgebildet ist, das Ausgeben benutzergenerierter Daten durch die Datenausgabeeinrichtung erst nach einer erfolgreichen Authentifizierung eines Benutzers freizugeben, wobei die Authentifizierung anhand eines Passworts und/oder eines biometrischen Merkmals und/oder eines Sicherheits-Tokens und/oder eines Schlüssels erfolgt. Dies ermöglicht es, ein erfindungsgemäßes Telekommunikationsendgerät in einer Umgebung mit einer Vielzahl von Benutzern einzusetzen und vertrauliche Daten wiederzugeben, ohne dass Benutzer, die nicht die eigentlichen Empfänger der Daten sind, Zugriff auf die Daten hätten. Ein Passwort kann z.B. ein schriftliches Passwort sein, welches über eine Tastatur eingegeben wird, aber auch ein gesprochenes Passwort sein, welches in ein Mikrophon des Telekommunikationsendgerätes gesprochen und von diesem erkannt wird. Biometrische Merkmale können ein Fingerabdruck, ein Abbild der Retina oder dergleichen sein. Als Sicherheits-Token können insbesondere RFID-Token oder Chipkarten eingesetzt werden.

In weiteren Ausführungsformen ist das Telekommunikationsendgerät auch als schnurloses Telefon und/oder als Mobiltelefon nutzbar.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNGEN

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer Ausführungsform eines erfindungsgemäßen Telekommunikationsendgeräts;
- Fig. 2: ein Ablaufdiagramm eines erfindungsgemäßen Verfahrens;
- Fig. 3: ein Blockschaltbild einer Ausführungsform einer erfindungsgemäßen Hauskommunikationsanlage;
- Fig. 4: ein Blockschaltbild einer weiteren Ausführungsform eines erfindungsgemäßen Telekommunikationsendgeräts.

In allen Figuren sind gleiche bzw. funktionsgleiche Elemente und Vorrichtungen - sofern nichts Anderes angegeben ist - mit denselben Bezugszeichen versehen worden.

### BESCHREIBUNG VON AUSFÜHRUNGSBEISPIELEN

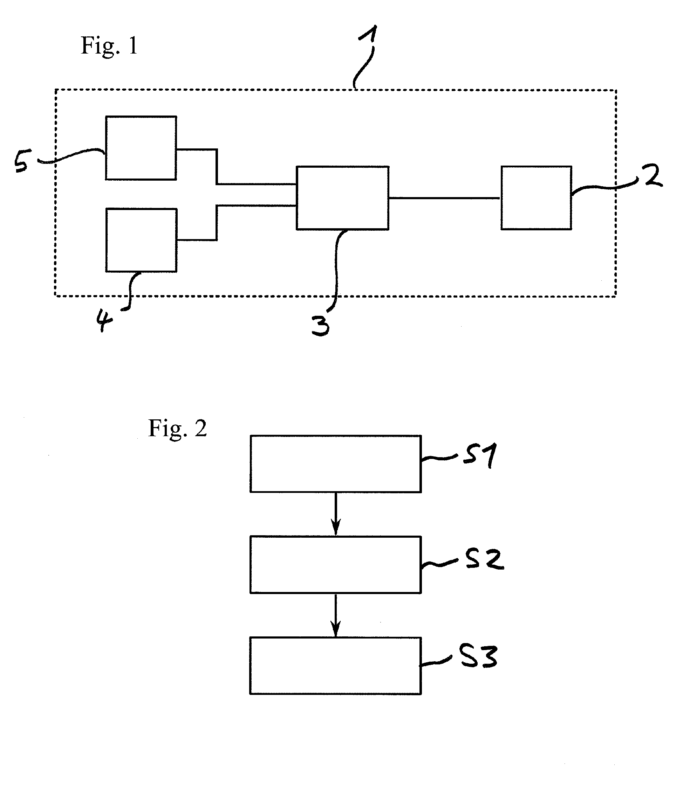

Fig. 1 zeigt ein Blockschaltbild einer Ausführungsform eines erfindungsgemäßen Telekommunikationsendgeräts 1. Das Telekommunikationsendgerät 1 weist eine Datenerfassungseinrichtung 2 auf, welche mit einer Steuereinrichtung 3 gekoppelt ist. Die Steuereinrichtung 3 wiederum ist mit einem Datenspeicher 4 und einer Datenausgabeeinrichtung 5 verbunden.

Die in Fig. 1 dargestellte Datenausgabeeinrichtung 5 ist ein Touchscreen 5 mit eingebauten Lautsprechern. Ferner weist die Datenerfassungseinrichtung 2 eine Videokamera auf, welche ebenfalls in dem Touchscreen 5 angeordnet ist. Die Lautsprecher und die Videokamera sind dabei in dem Rahmen des Touchscreens 5 angebracht. Die Datenerfassungseinrichtung 2 weist ferner eine Tastatur auf, welche als Bildschirmtastatur in dem Touchscreen 5 eingeblendet wird, sobald diese benötigt wird. In weiteren Ausführungsformen ist die Datenausgabeeinrichtung 5 nicht als Touchscreen sondern als normaler Bildschirm ausgestaltet. In solchen Ausführungsformen weist die Datenerfassungseinrichtung 2 ferner eine Tastatur und/oder eine Maus oder einen Trackball bzw. Stift auf.

Die Steuereinrichtung 3 in Fig. 1 ist ein Mikrocontroller 3, welcher den Touchscreen 5 als Benutzerschnittstelle zur Funktionsanzeige und -steuerung nutzt. Ferner nimmt der Mikrocontroller 3 die benutzergenerierten Daten von der Datenerfassungseinrichtung 2 entgegen und speichert diese in dem Datenspeicher 4 zur späteren Ausgabe über den Touchscreen 5 und/oder die Lautsprecher des Touchscreens 5.

Der Datenspeicher 4 ist in Fig. 1 als Flash-Speicher 4 ausgeführt, welcher über einen SPI-Bus mit dem Mikrocontroller 3 verbunden ist.

In einer weiteren Ausführungsform weist die Steuereinrichtung 3 einen Embedded-Computer auf, welcher ein Betriebssystem ausführt. In noch weiteren Ausführungsformen ist die Steuereinrichtung 3 ein Teil eines Computerprogrammprodukts, welches die Funktion des Telekommunikationsendgeräts 1 auf einem Computer ausführt. In einer weiteren Ausführungsform weist die Steuereinrichtung kein Betriebssystem sondern eine geeignete Software auf, welche die gewünschten Funktionen direkt ausführt.

Der Datenspeicher 4 ist in weiteren Ausführungsformen als Festplatte, als RAM-Speicher oder dergleichen ausgebildet.

Fig. 2 zeigt ein Ablaufdiagramm eines erfindungsgemäßen Verfahrens zum Benachrichtigen eines Benutzers mittels zweier unterschiedlicher Datenarten. Dabei werden in einem ersten Schritt S1 benutzergenerierte Daten bereitgestellt, welche in mindestens zwei Datenarten unterschiedlicher Erscheinungsform vorliegen. In einem zweiten Schritt S2 werden mindestens zwei Datenarten der benutzergenerierten Daten kombiniert, wobei die Datenarten Bilddaten und/oder Videodaten und/oder Audiodaten und/oder Textdaten aufweisen. Schließlich werden in einem Schritt S3 die kombinierten Datenarten gleichzeitig ausgegeben.

Das Bereitstellen S1 der benutzergenerierten Daten erfolgt durch die Datenerfassungseinrichtung 2, welche die Daten direkt von einem Benutzer empfängt. Ferner können die benutzergenerierten Daten mittels des Datenspeichers 4 bereitgestellt werden, welcher zuvor aufgenommene benutzergenerierten Daten aufweist. In noch weiteren Ausführungsformen werden die benutzergenerierten Daten über eine Kommunikationsschnittstelle 6 bereitgestellt.

Das Kombinieren S2 der Datenarten erfolgt in der Steuereinrichtung 3. Dabei können die Daten aufbereitet werden und in einer Vielzahl von Arten kombiniert werden. Beispielsweise können Textdaten als auf einem virtuellen Klebezettel dargestellter Text aufbereitet werden und an einer bestimmten Position auf einem Bildschirm einem Video überlagert werden. In weiteren Ausführungsformen wird der Bildschirm der Datenausgabeeinrichtung 5 in Bereiche unterteilt, wobei einer der Bereiche zur Ausgabe von Video- und/oder Bilddaten und ein anderer der Bereiche zur Ausgabe von Textdaten genutzt wird. Audiodaten können parallel zur Anzeige von Video-, Bild- oder Textdaten über Lautsprecher ausgegeben werden. In noch einer Ausführungsform kann ein Benutzer eine oder mehrere einzelne Datenarten der kombinierten Datenarten einer Nachricht auswählen und diese separat ausgeben lassen.

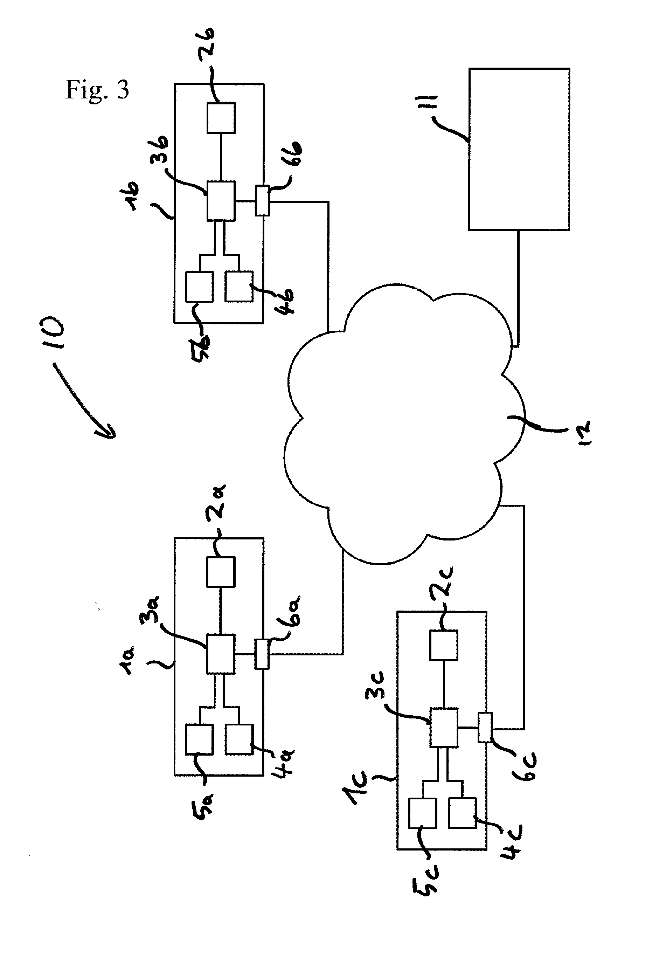

Fig. 3 zeigt ein Blockschaltbild einer Ausführungsform einer erfindungsgemäßen Hauskommunikationsanlage 10 mit drei erfindungsgemäßen Telekommunikationsendgeräten 1a, 1b, 1c. Jedes der Telekommunikationsendgeräte 1a, 1b, 1c weist eine Datenerfassungseinrichtung 2a, 2b, 2c auf, welche mit einer Steuereinrichtung 3a, 3b, 3c gekoppelt ist. Die Steuereinrichtungen 3a, 3b, 3c wiederum sind jeweils mit einem Datenspeicher 4a, 4b, 4c und einer Datenausgabeeinrichtung 5a, 5b, 5c verbunden. Im Unterschied zu dem Telekommunikationsendgerät 1 der Fig. 1 weisen die Telekommunikationsendgeräte 1a, 1b, 1c aus Fig. 3 ferner jeweils eine Kommunikationsschnittstelle 6a, 6b, 6c auf, über welche die Telekommunikationsendgeräte 1a, 1b, 1c mit einem Steuer- und/oder Datennetzwerk 12 verbunden werden können.

Die Hauskommunikationsanlage 10 weist ferner eine zentrale Steuereinrichtung 11 auf, welche über das Steuer- und/oder Datennetzwerk 12 mit jedem der drei Telekommunikationsendgeräte 1a, 1b, 1c kommunikativ verbunden ist.

Die zentrale Steuereinrichtung 11 ist ein Server 11 der Hauskommunikationsanlage 10, welcher die Steuerung und die Verwaltung der Funktionen der Hauskommunikationsanlage 10 durchführt. Bei dem Steuer- und/oder Datennetzwerk 12 handelt es sich um ein hausinternes Ethernet-Datennetzwerk 12, welches die Teilnehmer der Hauskommunikationsanlage 10 miteinander verbindet. In weiteren Ausführungsformen weist das Steuer-und/oder Datennetzwerk 12 ferner ein WLAN-Datennetzwerk auf.

In weiteren Ausführungsformen ist die zentrale Steuereinrichtung 11 ein Server 11, welcher in einem Rechenzentrum bereitgestellt ist, welches sich örtlich entfernt von dem Einsatzort der Hauskommunikationsanlage 10 befindet. In solch einem Fall ist das Steuer- und/oder Datennetzwerk 12 mit einem öffentlichen Netzwerk, wie zum Beispiel dem Internet, verbunden. Zu dem Server 11 baut die Hauskommunikationsanlage 10 eine Verbindung über das öffentliche Netzwerk auf. Die Verbindung zu dem Server 11 kann dabei durch eine Verschlüsselung, wie z.B. IPSEC, oder über eine VPN-Verbindung abgesichert werden.

In noch weiteren Ausführungsformen ist die zentrale Steuereinrichtung 11 kein Server 11 sondern ein Computerprogrammprodukt, welches in Form von Softwarekomponenten vorliegt, welche z.B. auf den einzelnen Kommunikationsendgeräten 1a, 1b, 1c der Hauskommunikationsanlage 10 oder in einem Cloud-Dienst ausgeführt werden.

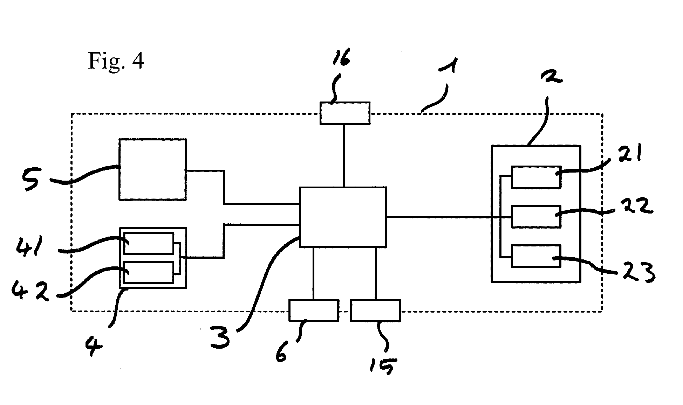

Fig. 4 zeigt ein Blockschaltbild einer weiteren Ausführungsform eines erfindungsgemäßen Telekommunikationsendgeräts 1. Im Unterschied zu dem Telekommunikationsendgerät 1 aus Fig. 1 weist das Telekommunikationsendgerät 1 aus Fig. 4 ferner eine Sicherheitseinrichtung 15 auf, welche mit der Steuereinrichtung 3 verbunden ist und welche dazu dient, einen Benutzer zu identifizieren.

Ferner weist das Telekommunikationsendgerät 1 aus Fig. 4 eine Hinweiseinrichtung 16 auf, welche dazu dient, den Benutzer auf das Vorhandensein einer Nachricht aufmerksam zu machen. Weiterhin weist die Datenerfassungseinrichtung 2 des Telekommunikationsendgeräts 1 aus Fig. 4 eine Kamera 21, ein Mikrophon 22 und eine Tastatur 23 auf. Schließlich weist der Datenspeicher 4 des Telekommunikationsendgerät 1 aus Fig. 4 einen RAM-Speicher 41 und einen Flash-Speicher 42 auf.

Will ein Benutzer mittels des Telekommunikationsendgeräts 1 aus Fig. 4 eine Nachricht aufnehmen, kann er mit Hilfe der Kamera 21, des Mikrophons 22 und der Tastatur 23 sowohl ein Video, als auch ein Sprachnachricht und/oder eine Textnachricht aufnehmen und diese beliebig miteinander kombinieren. So kann der Benutzer beispielsweise ein Video ohne Ton aufnehmen und dazu eine separate Sprachnachricht aufnehmen, welche er mit dem Video gemeinsam als Nachricht speichern kann. Nachrichten werden in dem Telekommunikationsendgerät 1 aus Fig. 4 in dem Flash-Speicher 42 gespeichert. Flash-Speicher ist üblicherweise billiger und kann daher in größeren Mengen eingesetzt werden, als z.B. der RAM-Speicher 41. Nachrichten, welche abgespielt werden sollen, können in den RAM-Speicher 41 geladen werden, da der Zugriff der Steuereinrichtung 3 auf den RAM-Speicher 41 schneller erfolgen kann, als auf den Flash-Speicher 42.

Die Hinweiseinrichtung 16 in Fig. 4 ist eine LED, welche durch die Steuereinrichtung 3 periodisch angesteuert wird und durch das dadurch erzeugte Aufleuchten einen Benutzer auf das Vorhandensein einer Nachricht aufmerksam macht.

Will ein Benutzer eine Nachricht abfragen, muss er sich vorher an der Sicherheitseinrichtung 15 identifizieren. Dies geschieht in Fig. 4 mittels eines RFID-Tokens, welches der Benutzer besitzt und welches von der Sicherheitseinrichtung 15 ausgelesen wird. In weiteren Ausführungsformen wird das Auslesen eines RFID-Tokens mit der Eingabe eines PIN-Codes, der Abfrage eines biometrischen Merkmals oder dergleichen kombiniert.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

### Bezugszeichenliste

- 1: Telekommunikationsendgerät
- 1a - 1c: Telekommunikationsendgerät
- 2: Datenerfassungseinrichtung
- 2a - 2c: Datenerfassungseinrichtung
- 3: Steuereinrichtung
- 3a - 3c: Steuereinrichtung
- 4: Datenspeicher
- 4a - 4c: Datenspeicher
- 5: Datenausgabeeinrichtung
- 5a - 5c: Datenausgabeeinrichtung
- 6: Kommunikationsschnittstelle
- 6a - 6c: Kommunikationsschnittstelle
- 10: Hauskommunikationsanlage
- 11: zentrale Steuereinrichtung
- 12: Steuer- und/oder Datennetzwerk
- 15: Sicherheitseinrichtung
- 16: Hinweiseinrichtung
- 21: Kamera
- 22: Mikrophon
- 23: Tastatur
- 41: RAM-Speicher
- 42: Flash-Speicher

- S1-S3: Verfahrensschritte

## Patentansprüche

1. Telekommunikationsendgerät, zum Speichern und Ausgeben benutzergenerierter Daten, insbesondere Hauskommunikationsendgerät für eine Hauskommunikationsanlage (10).
mit mindestens einer Datenerfassungseinrichtung (2, 2a - 2c) zum Erfassen von solchen benutzergenerierten Daten, welche in mindestens zwei Datenarten unterschiedlicher Erscheinungsform vorliegen,
mit mindestens einem Datenspeicher (4, 4a - 4c) zum Speichern der benutzergenerierten Daten,
mit mindestens einer Datenausgabeeinrichtung (5, 5a - 5c), welche dazu ausgebildet ist, einen Satz benutzergenerierter Daten, die mindestens zwei unterschiedlichen Datenarten zugeordnet sind, gleichzeitig auszugeben;
mit einer Steuereinrichtung (3, 3a - 3c), welche dazu ausgebildet ist, benutzergenerierte Daten von der Datenerfassungseinrichtung (2, 2a - 2c) abzufragen und in dem Datenspeicher (4, 4a - 4c) zu speichern und benutzergenerierte Daten aus dem Datenspeicher (4, 4a - 4c) auszulesen und der Datenausgabeeinrichtung (5, 5a - 5c) bereitzustellen.

2. Telekommunikationsendgerät nach Anspruch 1,
**dadurch gekennzeichnet ,**
**dass** die Datenarten Bilddaten und/oder Videodaten und/oder Audiodaten und/oder Textdaten bezeichnen.

3. Telekommunikationsendgerät nach mindestens einem der vorherigen Ansprüche,
**dadurch gekennzeichnet,**
**dass** die Datenerfassungseinrichtung (2, 2a - 2c) eine Kamera und/oder ein Mikrophon und/oder einen Touchscreen und/oder eine Tastatur und/oder eine Maus und/oder einen Trackball und/oder einen Stift und/oder eine optische Datenerfassungseinrichtung aufweist.

4. Telekommunikationsendgerät nach mindestens einem der vorherigen Ansprüche,
**dadurch gekennzeichnet,**
**dass** der Datenspeicher (4, 4a - 4c) einen RAM-Speicher und/oder eine Festplatte und/oder einen USB-Speicher und/oder eine Speicherkarte aufweist.

5. Telekommunikationsendgerät nach mindestens einem der vorherigen Ansprüche,
**dadurch gekennzeichnet,**
**dass** die Datenausgabeeinrichtung (5, 5a - 5c) eine optische und/oder eine akustische und/oder eine bewegungsgesteuerte Datenausgabeeinrichtung (5, 5a - 5c) aufweist.

6. Telekommunikationsendgerät nach mindestens einem der vorherigen Ansprüche,
**dadurch gekennzeichnet,**
**dass** das Telekommunikationsendgerät (1) ferner eine Kommunikationsschnittstelle (6, 6a - 6c) zum Kommunizieren mit einem Datenspeicher und/oder einer Hauskommunikationsanlage (10) aufweist.

7. Telekommunikationsendgerät nach Anspruch 6,
**dadurch gekennzeichnet ,**
**dass** die Kommunikationsschnittstelle (6, 6a - 6c) eine Ethernet-Schnittstelle und/oder eine WLAN-Schnittstelle und/oder eine Mobilfunk-Schnittstelle und/oder eine UMTS-Schnittstelle und/oder eine USB-Schnittstelle und/oder eine LightPeak-Schnittstelle und/oder eine Bluetooth-Schnittstelle aufweist.

8. Telekommunikationsendgerät nach mindestens einem der vorherigen Ansprüche,
**dadurch gekennzeichnet,**
**dass** die Steuereinrichtung (3, 3a - 3c) derart ausgebildet ist, benutzergenerierte Daten, welche über die Kommunikationsschnittstelle (6, 6a - 6c) an das Telekommunikationsendgerät (1, 1a- 1c) übermittelt werden, in dem Datenspeicher (4, 4a - 4c) zu speichern; und/oder
**dass** die Steuereinrichtung (3, 3a - 3c) derart ausgebildet ist, benutzergenerierte Daten, welche über die Kommunikationsschnittstelle (6, 6a - 6c) an das Telekommunikationsendgerät (1, 1a - 1c) übermittelt werden, der Datenausgabeeinrichtung (5, 5a - 5c) bereitzustellen.

9. Telekommunikationsendgerät nach mindestens einem der vorherigen Ansprüche,
**dadurch gekennzeichnet,**
**dass** ein externer Datenspeicher zum Speichern der benutzergenerierten Daten vorgesehen ist; und
**dass** die Steuereinrichtung (3, 3a - 3c) derart ausgebildet ist, benutzergenerierte Daten aus dem externen Datenspeicher zu laden und die geladenen benutzergenerierten Daten der Datenausgabeeinrichtung (5, 5a - 5c) bereitzustellen.

10. Telekommunikationsendgerät nach mindestens einem der vorherigen Ansprüche,
**dadurch gekennzeichnet,**
**dass** eine Hinweiseinrichtung (16) vorgesehen ist, welche derart ausgebildet ist, einen Benutzer auf das Vorhandensein benutzergenerierter Daten hinzuweisen, wobei die Hinweiseinrichtung (16) eine optische Anzeigeeinrichtung und/oder eine akustische Anzeigeeinrichtung und/oder eine mechanische Hinweiseinrichtung aufweist.

11. Telekommunikationsendgerät nach mindestens einem der vorherigen Ansprüche,
**dadurch gekennzeichnet,**
**dass** zu einem Satz benutzergenerierter Daten jeweils eine Zeitinformation gespeichert wird, welche angibt, wie lange die jeweiligen benutzergenerierten Daten anzeigbar sind oder in welchen zeitlichen Zyklen die jeweiligen benutzergenerierten Daten anzeigbar sind.

12. Telekommunikationsendgerät nach mindestens einem der vorherigen Ansprüche,
**dadurch gekennzeichnet,**
**dass** das Telekommunikationsendgerät (1, 1a - 1c) als Tablett-PC, Haus-PDA, als funktionserweiterter Anrufbeantworter und/oder als Computerprogrammprodukt, welches auf einem Computer ausführbar ist, ausgebildet ist.

13. Telekommunikationsendgerät nach mindestens einem der vorherigen Ansprüche,
**dadurch gekennzeichnet,**
**dass** eine Sicherheitseinrichtung (15) vorgesehen ist, welche dazu ausgebildet ist, das Ausgeben benutzergenerierter Daten durch die Datenausgabeeinrichtung (5, 5a - 5c) erst nach einer erfolgreichen Authentifizierung eines Benutzers freizugeben, wobei die Authentifizierung anhand eines Passworts und/oder eines biometrischen Merkmals und/oder eines Sicherheits-Tokens und/oder eines Schlüssels erfolgt.

14. Benachrichtigungsverfahren für eine Hauskommunikationsanlage (10) zum Benachrichtigen eines Benutzers mittels zweier unterschiedlicher Datenarten, mit den Schritten:
Bereitstellen (S1) benutzergenerierter Daten, welche in mindestens zwei Datenarten unterschiedlicher Erscheinungsform vorliegen;
Kombinieren (S2) mindestens zweier Datenarten der benutzergenerierten Daten, wobei die Datenarten als Bilddaten und/oder Videodaten und/oder Audiodaten und/oder Textdaten ausgebildet sind; und
gleichzeitiges Ausgeben (S3) der kombinierten Datenarten.

15. Benachrichtigungsverfahren nach Anspruch 14,
**dadurch gekennzeichnet,**
**dass** die benutzergenerierten Daten auf einem externen Datenspeicher gespeichert werden und das Kombinieren mindestens zweier Datenarten der benutzergenerierten Daten das Laden der benutzergenerierten Daten von dem externen Datenspeicher und das anschließende Kombinieren mindestens zweier Datenarten der benutzergenerierten Daten umfasst.

16. Benachrichtigungsverfahren nach einem der Ansprüche 14 und 15, mit dem weiteren Schritt:
Hinweisen eines Benutzers auf das Vorhandensein benutzergenerierter Daten durch Aufleuchten einer Hinweiseinrichtung (16) und/oder Abspielen eines akustischen Hinweissignals und/oder Vibrieren einer Vibrationseinrichtung.

17. Hauskommunikationsanlage,
mit mindestens einem Telekommunikationsendgerät (1, 1a - 1c) nach einem der Ansprüche 1 bis 13;
mit einer zentralen Steuereinrichtung (11), welche dazu ausgebildet ist, Funktionen der Hauskommunikationsanlage (10) zu steuern;
mit einem Steuer- und/oder Datennetzwerk (12), welches die Telekommunikationsendgeräte (1, 1a - 1c) untereinander und mit der zentralen Steuereinrichtung (11) koppelt.

18. Hauskommunikationsanlage nach Anspruch 17,
**dadurch gekennzeichnet,**
**dass** das Steuer- und/oder Datennetzwerk (12) ein drahtgebundenes Netzwerk und/oder ein drahtloses Netzwerk ist.
